(19) Europäisches Patentamt
European Patent Office
Office européen des brevets

(11) **EP 2 703 847 A1**

(12) **EUROPEAN PATENT APPLICATION**
published in accordance with Art. 153(4) EPC

(43) Date of publication:
**05.03.2014 Bulletin 2014/10**

(51) Int Cl.:
***G01V 1/28*** (2006.01)

(21) Application number: **11859331.8**

(22) Date of filing: **25.02.2011**

(86) International application number:
**PCT/PE2011/000004**

(87) International publication number:
**WO 2012/115529 (30.08.2012 Gazette 2012/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicants:
• **Cuadra Canales, Francisco**
  **Lima 41 (PE)**
• **Alvarez Lopez, José Gabriel**
  **Lima 12 (PE)**

(72) Inventors:
• **Cuadra Canales, Francisco**
  **Lima 41 (PE)**
• **Alvarez Lopez, José Gabriel**
  **Lima 12 (PE)**

(74) Representative: **Antevski, Zlatko**
  **Boul. Sv. Kliment Ohridski 29**
  **4th Floor, Apt. no. 20**
  **1000 Skopje (MK)**

(54) **METHOD OF DYNAMIC SEISMIC PROSPECTING**

(57)    The " METHOD OF DYNAMIC SEISMIC PROSPECTING ", is a technological innovation applied to Seismic Prospecting in oil and/or natural gas exploration, based on changes in the conception and treatment of the behavior of the reflections of the seismic or sonic waves in the geological layers of the subsoil, in accordance with Fresnel's theory, in order to improve the current methodology and overcome the problems and limitations thereof, The method includes **two novel aspects**:
The acquisition of field seismic data uses 2D and 3D seismic meshes and lines having a lower density of shot points and geophones, as a function of Fresnel diameters, resulting in substantial savings of time and cost in seismic exploration.

When reprocessing seismic data, the seismic images or sections obtained through a conventional method are subjected to a process that corrects the deformations or distortions not resolved by current conventional methods. To that end, a geometric process is used that makes it possible to obtain an image closer to the true configuration of the geological structure being studied, avoiding errors in the location of geological faults, in drilling dry wells, or non-detected structures of lesser range, etc. and thus avoiding financial losses and losses from natural resources not being exploited owing to deposits being needlessly abandoned.

Fig.8  SECTIONS OF TWO CONES OF EMISSION AND REFLECTIONS A₁ B₁ C₁ AND,, B,, C, ON A CONVEX SPHERICAL SURFACE OF CENTER "0" AND RADIO "R"

Description

**TECHNICAL FIELD OF THE INVENTION**

Oil Industry

**BACKGROUND OF THE INVENTION**

- The techniques of seismic prospecting used in the exploration of oil and/or gas fields are currently based on the behavior of seismic waves, which is described by Snell's law of reflections. This law states that seismic or sound waves travel through a medium and are reflected at a single point on the reflecting surface.

- The detailed techniques used in 2D and 3D seismic prospecting, based on the concept mentioned earlier, have significant limitations. The seismic image or section obtained after data processing is a virtual image with distortion, which the methods used today fail to correct.

- In the behavior of seismic and/or sound waves, there is Fresnel's theory, It has been proven by experiments in Dr. J. Woods' laboratory and it shows that the reflected waves do not come from a single point but from a circle on the reflecting surface, as we will discuss later.

- In the face of the limitations of the 'current conventional methods', the application of our method of Dynamic Seismic Prospecting provides the possibility to overcome them with better results.

**DESCRIPTION OF THE INVENTION**

The aim of this invention is to provide a solution, by using a method of technological innovation, to major problems and limitations in the current seismic prospecting and in the exploration of oil and/or gas fields. To that end, we will analyze the problems and limitations of the current technological system and then the foundations and the methodology.

The problems and limitations of the current system are:

1.- Errors in the location of geological faults,

2.- Drilling of poorly sited exploration wells (dry wells),

3.- Non-detected geological structures of lesser range or size,

4.- **Design** and implementation of meshes of seismic lines, which have a high density of shot points and a large number of geophones in seismic exploration.

This invention seeks to solve the aforementioned problems through the method of dynamic seismic prospecting, which include the Fieldwork and the Reprocessing of Seismic Sections

- **Fieldwork**

The method for obtaining field data consists in:

a. After selecting the area to explore and getting to know the range of depths in which the geological layers with oil potential are located, the diameters of the Fresnel zone of reflections are determined.

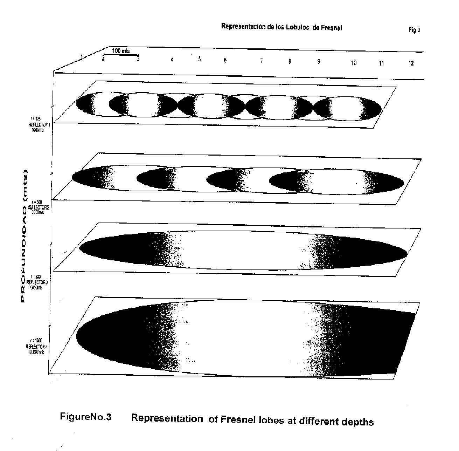

b. Then, the 2D and/or 3d seismic lines and/or meshes are designed with shot point and geophone spacing, which depends on the diameters of the Fresnel zone of reflections found in the previous step. This procedure avoids locating an excessive and unnecessary concentration of shot points and geophones, which do not provide more information than those calculated and determined by the Fresnel formula as shown in figure 3.

c. With this arrangement, we are able to obtain information or field data equivalent to those obtained with the conventional system but with significant time and cost savings.

- **Reprocessing of Seismic Sections**

The method consists in correcting the distortion of the images or the seismic sections obtained by the processing or the conventional method, through the following procedure:

a. The image or the seismic section of the area being studied to be corrected is selected.
b. The depth of the geological layer from which the image emerges is determined.

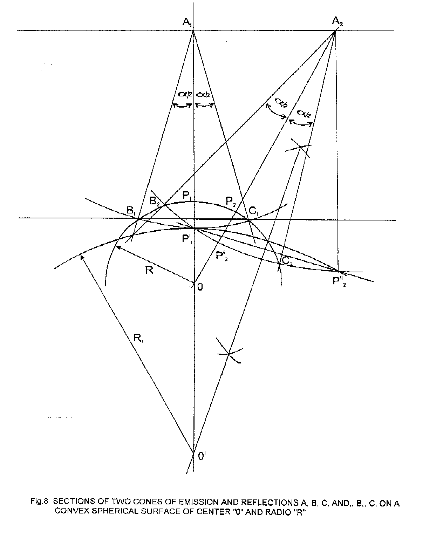

c. In figure 8 and its description, we have the procedure and the explanation of how the distortion of the section of a spherical dome of radius R and center at O is produced. It also shows that as a result of lateral distortion or flank effect and of vertical distortion or crown effect of the Fresnel zone of reflections, the distorted image or section is produced, represented by the arc of a circle with radius R1. This image of radius R1 is replaced by the seismic section selected in step 'a'.
d. By taking the seismic section selected in step 'a' and using the appropriate scales, we determine its radius of curvature R1.
e. Using the depth data of the geological layer found in step b, we calculate the radius of the circumference of Fresnel's reflections or also the angle formed by opposing generatrices of the cone of reflections and emissions.

f. Using this data, we carry out the geometric procedure in reverse order to the order shown in the example of Figure 8. So now we start with the distorted seismic figure or section of radius R1 and center at O. We take a section with an estimated radius and find its distorted image by the method in the example of Figure 8, and, we have to compare if the obtained image differs from the section being studied in excess or defect.

g. Then, by successive or iterative interpolations, approximations will be made, until obtaining the arc that generated the distorted section. In this way, an image or shape of the corrected structural section is obtained and it is very close to the true shape.

## BRIEF DESCRIPTION OF THE DRAWINGS

Figure No. 1 is a diagram that shows how the Fresnel Zone is defined, in which a wavefront coming from point S comes in contact with point O at a depth of Z0. Then, when the wave advances to λ4, this front intercepts the plane at points A and A ', where AA' is the diameter of the Fresnel Zone.

Figure No. 1A is a diagram of reflections on a dome, which shows the section of a portion of a sphere lying on the floor, on which acoustic signals are reflected. The source and the receiver of these signals move together above the plane, and, a diagram is registered on the upper part. The dome presents a distorted figure caused by flattening and the increase of the diameter.

Figure No. 2 shows the Typical Design of the Current Conventional Seismology, in which the shot points are placed 100 meters apart and the geophones or receivers are placed 50 meters apart, showing the high density of shot points and geophones per linear kilometer.

Figure No. 3, represents the Fresnel lobes at different depths, and shows how the diameter of the Fresnel zone increases in direct proportion to the depth.

Figure No. 4 is a spatial representation of the Cone of Emissions and Reflections, in which point A represents the source and receiver of the signal that strikes the flat reflector at an AP distance, where BC is the diameter of the Fresnel Zone of Reflections.

Figure No 5 is a section of the Cone of Emissions and Reflections of Figure No. 4, in which the virtual point P' is shown. This diagram also shows the angle formed by the opposing generatrices and the Cone axis.

Figure No. 6 is a spatial representation of the Cone of Emissions and Reflections, in which a convex reflective surface is used. A is the transmitter-receiver point, P is the spherical cap vertex and BC is the diameter of the zone of reflections or Fresnel Zone.

Figure No. 7 is a section of the Cone of Emissions and Reflections of Figure No. 6, in which the point P', the virtual point of point P, is shown This diagram also shows the angle formed by the opposing generatrices and the Cone axis.

Figure No. 8 shows the sections of two Cones of Emissions and Reflections, A1B1C1 and A2B2C2, in which the reflecting surface is a spherical cap of radius R and center at 0 (blue arc). A1 and A2 are the transmitter-receiver points of each Cone, the points P1 and P2 are the vertices of the sphere for each Cone. From the virtual points P' 1, P' 2 and P"2an arc is formed. This arc is from the sphere with radius R1 and center at O'(red arc) and it represents the distorted image of the spherical reflector of radius R and center at O (blue arc).

Figure No. 9 shows a Structural Section of the 30-XC Well, which has been drilled in the area where a fault lowered the ground surface. Its position was erroneously defined by the Conventional Seismology.

Figure No. 11, is a Structural Map of the Corrientes oilfield. It shows the fault trace in accordance with the Conventional Method (The one that is farthest away from the core of the structure), and with the Method of Dynamic Seismic Prospecting (The one that is closer to the core of the structure). Notice the difference between both traces.

## REALIZATION OF THE INVENTION

The invention was motivated by a real case in which, after a seismic exploration, a geological structure with oil potential was found When the exploration well had been drilled, it turned out to be dry. This anomaly intrigued and worried the technical manager and led to research to determine the causes of the error or errors made in the procedure or working method.

There are distortions in the images or seismic sections not resolved by current conventional methods, resulting in frequent errors which translate into investment losses and losses from the resource to be extracted.

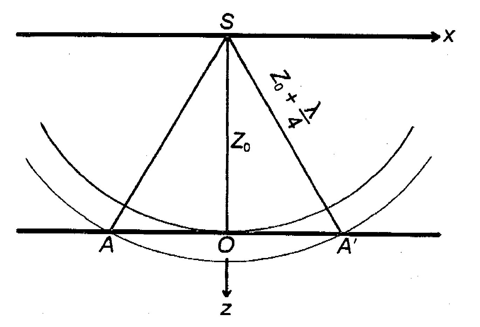

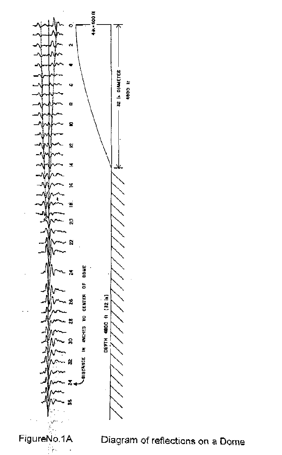

In Fig. 1, it is shown that, according to Fresnel's theory, the reflections of seismic signals that come from the reflecting layers of the subsurface don't come from a single point, as it has been stated by Snell's Law of Reflections, but from a circumference whose radio is determined by the Fresnel Zone.

In Fig. 1, the energy that travels from the point S of the surface reaches the point O of the reflecting surface at time $t0 = 2Z_0/ V$.

Now let the incident wavefront advance in depth by the amount $\lambda/4$. Energy from seismic location A or A' will reach the receiver at time $t1 = 2 (Z0 + \lambda/4) / V$.

This means that the energy from all the points within the reflecting disc with radius OA' will arrive sometime between t0 and t1 The total energy arriving within the time interval (t1-t0), which equals half the dominant period (T / 2), **interferes constructively**. The reflecting disc AA' is defined by Hilterman as "a half-wavelength Fresnel zone" or by Sheriff as "the first Fresnel zone". This analysis leads to the following law: "**Two or more reflecting points that fall within this zone are considered indistinguishable as observed from the Earth's surface**". This condition removes the need for placing the shot points and the geophones very close in the layout of exploration seismic lines and/or meshes, because the reflecting points that fall within the Fresnel zone do not provide more information than any of them.

Since the Fresnel zone depends on wavelength, it also depends on frequency.

To define the Fresnel zone, it is important to note that, besides frequency, lateral resolution also depends on velocity and the depth of the reflecting interface. Thereby, the radius of the wavefront is approximated by:

$$r = (V / 2) (t / f)^{1/2}$$

Where: (See fig. 1)

    r = OA, radius of the Fresnel Zone
    V = Seismic wave velocity
    t = Seismic wave travel time to and from
    F = Frequency
    Z = Depth
    $\lambda$ = Wavelength

Woods' experiments on discs and rings in laboratory prove the Fresnel theory, showing that the sound waves reflections do not come from a single point of the reflecting surface but from rings, which indicates that the energy that comes from a single point of the reflector is too weak to be captured by the receivers (Geophones). There is a critical diameter given by the Fresnel formula, where the signal captured by the receivers is maximal, with greater or lesser diameter the signal decays. This result tells us that the seismic signals are reflected in a circle under special conditions in which **the reflective layer is flat** and the transmitter and receiver are located at the same point. However, if the signal transmitter and receiver are separated, the reflections will come from a succession of points on an elliptical line, whose condition is that, the signal to and from travel time in each reflection point is the same or its reception is simultaneous.

Figure 1A shows the section of a portion of a sphere lying on the floor (shown in the laboratory experiments of Dr. J. Woods).

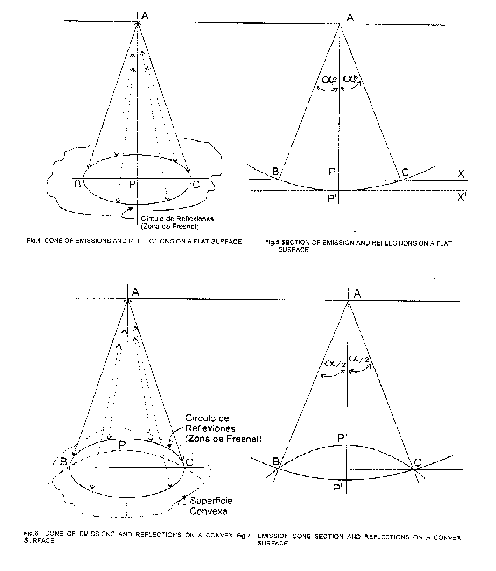

As can be seen, the dome seismic section is flattened, and the height in relation to the vertical axis is much lower than the actual height of the dome, and the radio on the horizontal line of the seismic section is larger than the horizontal radius of the dome It shows that lateral and vertical distortions occur when obtaining the seismic section. The lateral distortion is produced by the flank effect of the dome, and the vertical distortion is due to the crown effect caused by the Fresnel Zone. The vertical distortion is less when the reflective surface is flat, as shown in figures 4 and 5.

In the case of a convex reflective surface or a dome-shaped surface, if for example, the reflective surface is a spherical dome, the circle of reflections of the Fresnel Zone will be located as a Crown on the spherical dome, as shown in Figs. 6 and 7.

Analysing the theory of Fresnel, proven in laboratory experiments by Dr. Woods, about the nature of the reflections, two very important characteristics are determined. These characteristics are not applied by conventional exploration methods and are as follows:

    1. Seismic reflections do not come from a point, these reflections come from a circle whose radius is determined by the formula of Fresnel.
    2. For this reason, vertical and horizontal distortions in the obtained images or seismic sections are produced, and which the currently known conventional methods fail to correct.

The invention consists in the realization of a method of Seismic Prospecting, which we will call 'Method of Dynamic Seismic Prospecting', and includes two important new aspects related to the seismic prospecting in the Oil industry. The first is used in the fieldwork to obtain seismic data and the latter is used in the data processing.

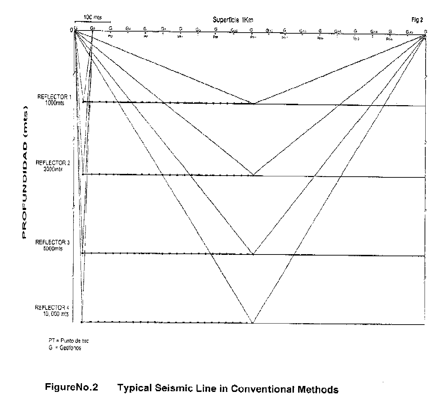

    1.- In the fieldwork, the 'Method of Dynamic Seismic Prospecting', introduces an important new change in the design of the seismic lines and/or meshes for obtaining seismic data, based on the behavior of the reflections, in accordance with the Fresnel Zone of Reflections, in which the spacing of the shot points and the number of geophones, are in function of the radii of the circumferences of the Fresnel Zone, according to the depth and characteristics of the areas being studied, see figures 2 and 3.
    Two or more points that fall within the Fresnel Zone of Reflections are indistinguishable from each other; it is therefore useless to agglomerate Reflection points within this area, because they will not give more information than the one that can be provided by one or two points.

2.- In the processing of seismic data, the Method of 'Dynamic Seismic' introduces another important novel change when reprocessing the obtained seismic images and sections. In order to correct the distortions of the structural forms in the specific areas selected in the study, these corrections are carried out following a geometric procedure that is explained below:

In Figure 8, we show two sections of cones of emission-reflection A1 B1 C1 and A2 B2 C2, in which the signals are reflected on a spherical surface of radius R and center 0 (blue arc).

From the first emitter-receiver point A1, the virtual point P'1 is obtained as in Fig. 7. Then, from the second emitter- reflector point A2, the virtual point P'2 is obtained. If we draw an arc at this point with radio A2 P'2 with center at A2, and we intercept it with the vertical passing through A2, we obtain the virtual point P'2, where A2 P' 2 =A2 P''2. In this way, we can find more intermediate virtual points but, to simplify things, we will refer to P'1 and P ''2, which are points that are in the distorted section of the spherical reflective surface section. In this case, the virtual point P'1 corresponds to the highest point P1 of the spherical reflecting surface. And the point P ''2 correspond to the virtual point P'2 of the point P2,which is, in the spherical reflecting surface, the closest point to the emitter-receiver point A1.

The virtual point P ''2 is the result of combined distortion caused by the crown effect and the flank effect, as shown in Fig. 8. There is a major distortion in relation to the original position of the corresponding point.

If we draw the perpendicular bisector of the line P'1 P ''2 and intercept it with the vertical line passing through the point A1, we obtain the point O', which is the center of the section of the sphere of radius R1, which contains the points P'1 and P ''2, (red arc), and represents the distorted section of the spherical section of radius R and center O (blue are),

Having explained how the distortion occurs in the image of a seismic section by the effect of the Fresnel Zone of Reflections, we are able to make the correction of a seismic section obtained by conventional processing For this purpose, we proceed as follows:

As a first step, we select the seismic image or section of the area being studied that needs to be corrected.

The depth of the geological layer is determined, from which such image emerges.

Taking the selected seismic section and using appropriate scales, we determine its radius of curvature R1.

Using the depth data of the geological layer, we calculate the radius of the circumference of Fresnel reflections or also the angle formed by the opposing generatrices of the cone of reflections and emissions.

Using this data, we carry out the geometric procedure in reverse order to the order shown in the example of Figure 8. So now we start with the distorted seismic figure or section of radius R1 and center at O. We take a section with an estimated radius and find its distorted image by the method in the example of Figure 8, and, we have to compare if the obtained image differs from the section being studied in excess or defect.

Then by successive or iterative interpolations, approximations will be made, until obtaining the arc that generated the distorted section. In this way, an image or shape of the corrected structural section is obtained and it is very close to the true shape.

As a corollary to the above, practical evidences show that, unfortunately, the drilling of poorly sited wells meant a loss of several millions of dollars to PETROLEOS DEL PERU SA. These wells were located employing seismic technology currently used at international level.

This situation is still continuing and there is also the problem of neglecting structures with very small periclines, which are considered as mere "noses", when in fact some are full of oil.

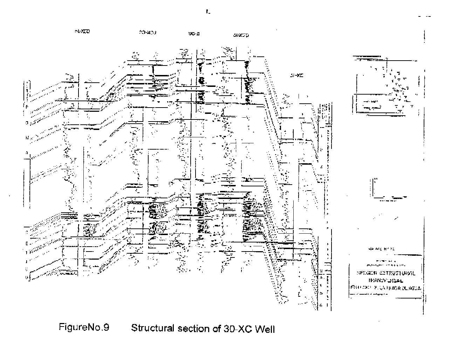

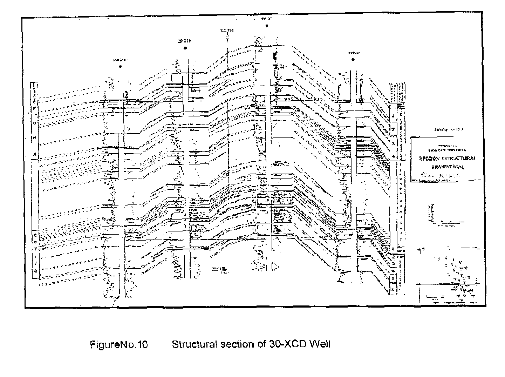

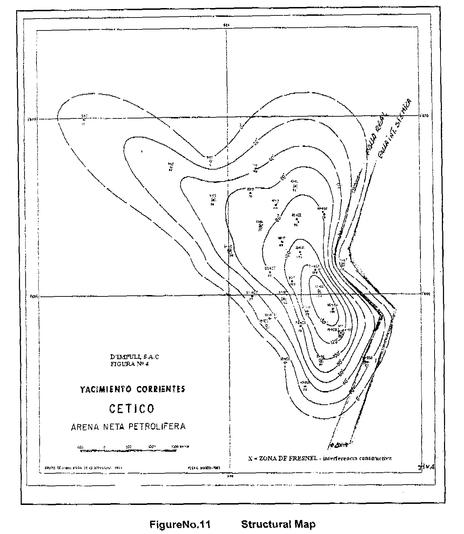

As observed in the structural map (Fig. 11), and seismic sections of the Corrientes oilfield located in the Marañon Basin - Peruvian Rainforest (Figures 9 and 10), there is a shifting $\Delta X$ of the fault, because of the effects of the constructive interference of the Fresnel Zone of about 300 meters. According to the traditional interpretation results, the fault was located more to the East and consequently these wells were located in a high level of the structure. After drilling, it was found that the objectives were far down in an area where a fault lowered the ground surface and the reservoir sands were filled with water. The uncorrected constructive effect of Fresnel produced this anomaly, This is situation that has now been resolved by the new technology of the "Method of Dynamic Seismic Prospecting".

**Claims**

1. "METHOD OF DYNAMIC SEISMIC PROSPECTING" for the collection of field data, **characterized by** the following steps:

    a. Calculate the diameters of the Fresnel zone of reflections as a function of the estimated depths in the area of exploration.
    b. **Determine** the spacing of shot points and geophones of the lines and / or meshes of 2D and/or 3D seismic lines as a function of the diameters obtained in step "a".
    c. Design the lines or meshes of 2D and / or 3D seismic lines with spacing obtained in step "b", thereby avoiding excessive and unnecessary concentration of shot points and geophones.

2. " METHOD OF DYNAMIC SEISMIC PROSPECTING" for the correction of distortions of the seismic images or sections obtained by the conventional method, **characterized by** the following steps:

 a. The image or the seismic section of the area being studied to be corrected is selected.

 b. The depth of the geological layer from which the image emerges is determined.

 c. By taking the seismic section selected in step 'a' and using the appropriate scales, we determine its radius of curvature R1.

 d. Using the depth data of the geological layer found in step b, we calculate the radius of the circumference of Fresnel's reflections or also the angle formed by opposing generatrices of the cone of reflections and emissions.

 e. Using this data, we carry out the geometric procedure in reverse order to the order shown in the example of Figure 8. So now we start with the distorted seismic figure or section of radius R1 and center at O. We take a section with an estimated radius and find its distorted image by the method in the example of Figure 8, and, we have to compare if the obtained image differs from the section being studied in excess or defect.

 f. Then, by successive or iterative interpolations, approximations will be made, until obtaining the arc that generated the distorted section. In this way, an image or shape of the corrected structural section is obtained and it is very close to the true shape.

FigureNo.1A    Diagram of reflections on a Dome

FigureNo.2    Typical Seismic Line in Conventional Methods

Representación de los Lobulos de Fresnel

Fig 3

FigureNo.3    Representation of Fresnel lobes at different depths

Fig.4 CONE OF EMISSIONS AND REFLECTIONS ON A FLAT SURFACE

Fig 5 SECTION OF EMISSION AND REFLECTIONS ON A FLAT SURFACE

Fig.6 CONE OF EMISSIONS AND REFLECTIONS ON A CONVEX SURFACE

Fig.7 EMISSION CONE SECTION AND REFLECTIONS ON A CONVEX SURFACE

Fig.8 SECTIONS OF TWO CONES OF EMISSION AND REFLECTIONS A, B, C, AND,, B,, C, ON A
CONVEX SPHERICAL SURFACE OF CENTER "0" AND RADIO "R"

FigureNo.9    Structural section of 30-XC Well

FigureNo.10    Structural section of 30-XCD Well

D'IMPULL S.A.C
FIGURA Nº 4

YACIMIENTO CORRIENTES

CETICO

ARENA NETA PETROLIFERA

X = ZONA DE FRESNEL - interferencia constructiva

FigureNo.11    Structural Map

# INTERNATIONAL SEARCH REPORT

| International application No. |
|---|
| PCT/PE2011/000004 |

A. CLASSIFICATION OF SUBJECT MATTER

*G01V1/28* (2006.01)

According to International Patent Classification (IPC) or to both national classification and IPC

B. FIELDS SEARCHED

Minimum documentation searched (classification system followed by classification symbols)
G01V1

Documentation searched other than minimum documentation to the extent that such documents are included in the fields searched

Electronic data base consulted during the international search (name of data base and, where practicable, search terms used)

EPODOC, INVENES, XPESP, WPI

C. DOCUMENTS CONSIDERED TO BE RELEVANT

| Category* | Citation of document, with indication, where appropriate, of the relevant passages | Relevant to claim No. |
|---|---|---|
| X | (GÖRTZ et al.) "*Optimized 3D VSP survey geometry based on Fresnel zones estimates*". SEG/HOUSTON 2005 ANNUAL MEETING. pages 2641-2645. 06/11/2005 | 1 |
| X | WO 2009137237 A2 (APACHE) 12/11/2009, Paragraphs [15, 30, 33, 41-51]; figures 1a, 1b; 4a, 4b | 1 |
| A | (GRANJEAN et al.): "*JaTS: a fully portable seismic tomography software based on Fresnel wavepaths and a probabilistic reconstruction approach*" in COMPUTERS AND GEOSCIENCES, Vol. 30, N° 9-10, pages 925 - 935. 31/10/2004 | 2 |
| A | US 2004122594 A1 ( MATSUOKA et al.) 24/06/2004, paragraphs [9,10 26-53; 88] | 2 |

☒ Further documents are listed in the continuation of Box C.    ☒ See patent family annex.

| | |
|---|---|
| *      Special categories of cited documents:<br>"A"   document defining the general state of the art which is not considered to be of particular relevance.<br>"E"   earlier document but published on or after the international filing date<br>"L"   document which may throw doubts on priority claim(s) or which is cited to establish the publication date of another citation or other special reason (as specified)<br>"O"   document referring to an oral disclosure use, exhibition, or other means.<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other documents , such combination being obvious to a person skilled in the art<br>"&"   document member of the same patent family |
| Date of the actual completion of the international search<br>04/10/2011 | Date of mailing of the international search report<br>**(17/11/2011)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>F. Olalde Sánchez<br><br><br>Telephone No. 91 3498469 |

Form PCT/ISA/210 (second sheet) (July 2009)

## INTERNATIONAL SEARCH REPORT

| | International application No. |
|---|---|
| | PCT/PE2011/000004 |

| C (continuation). | DOCUMENTS CONSIDERED TO BE RELEVANT | |
|---|---|---|
| Category * | Citation of documents, with indication, where appropriate, of the relevant passages | Relevant to claim No. |
| A | (RAWLINSON et al.): "*Seismic tomography: A window into deep Earth*" in PHYSICS OF THE EARTH AND PLANETARY INTERIORS, Vol. 178, Nº 3-4, pages 101-135. 13/10/2009 | 2 |

Form PCT/ISA/210 (continuation of second sheet) (July 2009)

<div align="center">

**INTERNATIONAL SEARCH REPORT**

Information on patent family members

</div>

| | International application No. |
| --- | --- |
| | PCT/PE2011/000004 |

| Patent document cited in the search report | Publication date | Patent family member(s) | Publication date |
| --- | --- | --- | --- |
| WO2009137237 A | 12.11.2009 | CA2732291 A | 12.11.2009 |
| | | AU2009244616 A | 12.11.2009 |
| | | US2009279388 A | 12.11.2009 |
| | | US7944774 B | 17.05.2011 |
| | | US2009279386 A | 12.11.2009 |
| | | EP2279434 A | 02.02.2011 |
| | | EP20090743224 | 14.04.2009 |
| US2004122594 A | 24.06.2004 | US7027927 B | 11.04.2006 |
| | | CA2511631 A | 08.07.2004 |
| | | WO2004057373 A | 08.07.2004 |
| | | AU2003288614 A | 14.07.2004 |
| | | AU2003288614 B | 06.08.2009 |
| | | MXPA05006835 A | 16.08.2005 |
| | | NO20053218 A | 31.08.2005 |
| | | EP1576393 A | 21.09.2005 |
| | | EP20030780456 | 18.12.2003 |
| | | RU2331089 C | 10.08.2008 |
| | | RU2005123380 A | 20.01.2006 |
| | | CN1748157 A | 15.03.2006 |
| | | CN100340870 C | 03.10.2007 |

Form PCT/ISA/210 (patent family annex) (July 2009)